# EUROPEAN PATENT APPLICATION

(11) **EP 4 175 383 A1**
(43) Date of publication of application: **03.05.2023**
(21) Application number: 21828619.3
(22) Date of filing: 25.04.2021
(51) Int. Cl.: H04W 72/04

(54) **INFORMATION PROCESSING METHOD AND APPARATUS, AND NETWORK DEVICE**

(30) Priority: 24.06.2020 CN 202010588203
(71) Applicant: ZTE Corporation, Shenzhen, Guangdong 518057 (CN)
(72) Inventor: WANG, Lilin, Shenzhen, Guangdong 518057 (CN); PI, Qiang, Shenzhen, Guangdong 518057 (CN); LIU, Kai, Shenzhen, Guangdong 518057 (CN); WU, Xueqiang, Shenzhen, Guangdong 518057 (CN); TIAN, Chunyu, Shenzhen, Guangdong 518057 (CN)
(74) Representative: Osterhoff, Utz
(86) International application number: PCT/CN2021/089637
(87) International publication number: WO 2021/258844

(57) **Abstract**

Embodiments of the present application relate to the field of communications, and disclose an information processing method, an information processing apparatus and a network device. The information processing method includes: obtaining to-be-decoded multiplexed data of an enhanced mobile broadband (eMBB) service and an ultra reliability and low latency communication (URLLC) service; obtaining a number of decoders to decode the multiplexed data; allocating a first decoding resource for the URLLC service data and a second decoding resource for the eMBB service data in the multiplexed data according to the number of decoders; and decoding the URLLC service data by using the first decoding resource, and decoding the eMBB service data by using the second decoding resource.

## Description

### CROSS-REFERENCE TO RELATED APPLICATIONS

This application claims priority to Chinese Patent Application No. 202010588203.2, filed on June 24, 2020, the entire contents of which are incorporated herein by reference.

### TECHNICAL FIELD

Embodiments of the present application relate to the field of communications, and in particular to an information processing method, an information processing apparatus and a network device.

### BACKGROUND

In 5G application scenarios, enhanced mobile broadband (eMBB) services and ultra reliability and low latency communication (URLLC) services can multiplex the same time and frequency resources for transmission. Considering the burstiness, high reliability and low latency of the URLLC services, a common multiplexing method is that URLLC strongly occupies the time and frequency resources of the eMBB service, and the eMBB signals on these time and frequency resources are knocked out by puncturing.

During the transmission of eMBB and URLLC multiplexing time and frequency resources by puncturing, the receiver, such as a downlink UE or an uplink base station, needs to decode the received multiplexed data of the eMBB and URLLC services. Currently, there is not given a set of standard decoding methods. Generally, the receiver will decode in the order of data reception. However, during realizing the embodiment of the present application, the inventor found that, because eMBB services usually have large code blocks, decoding in the order of data reception cannot meet the low latency demand of URLLC services.

### SUMMARY

Embodiments of the present application provide an information processing method, including: obtaining to-be-decoded multiplexed data of an enhanced mobile broadband (eMBB) service and an ultra reliability and low latency communication (URLLC) service; obtaining a number of decoders to decode the multiplexed data; allocating a first decoding resource for the URLLC service data and a second decoding resource for the eMBB service data in the multiplexed data according to the number of decoders; and decoding the URLLC service data by using the first decoding resource, and decoding the eMBB service data by using the second decoding resource.

Embodiments of the present application also provide an information processing apparatus, including: a first obtaining module, for obtaining to-be-decoded multiplexed data of an enhanced mobile broadband (eMBB) service and an ultra reliability and low latency communication (URLLC) service; a second obtaining module, for obtaining a number of decoders to decode the multiplexed data obtained by the first obtaining module; a resource allocation module, for allocating a first decoding resource for URLLC service data and a second decoding resource for eMBB service data in the multiplexed data obtained by the first obtaining module according to the number of decoders obtained by the second obtaining module; and a decoding module, for decoding the URLLC service data by using the first decoding resource allocated by the resource allocation module, and decoding the eMBB service data by using the second decoding resource allocated by the resource allocation module.

Embodiments of the present application also provide a network device, including: at least one processor; and a memory communicated with the at least one processor; wherein the memory stores instructions executable by the at least one processor, the instructions are executed by the at least one processor to enable the at least one processor to perform the information processing method as mentioned above.

Embodiments of the present application also provide a computer-readable storage medium, characterized in that the storage medium stores computer programs, the computer programs are executed by a processor to implement the information processing method as mentioned above.

### BRIEF DESCRIPTION OF THE DRAWINGS

One or more embodiments are illustrated exemplarily by corresponding drawings, and these exemplary illustrations do not constitute a limitation of the embodiments.
FIG. 1 is a flowchart of an information processing method according to a first embodiment of the present application.
FIG. 2 is a flowchart of the information processing method according to a second embodiment of the present application.
FIG. 3 is a schematic structural diagram of multiplexed data of the eMBB service and the URLLC service in the information processing method shown in FIG. 2 according to a second embodiment of the present application.
FIG. 4 is a first schematic diagram of a signal flow of the information processing method according to a second embodiment of the present application.
FIG. 5 is a second schematic diagram of the signal flow of the information processing method according to a second embodiment of the present application.
FIG. 6 is a flowchart of operation 2031 in the information processing method shown in FIG. 2 according to a second embodiment of the present application.
FIG. 7 is a flowchart of operation 2032 in the information processing method shown in FIG. 2 according to a second embodiment of the present application.
FIG. 8 is a flowchart of the information processing method according to a third embodiment of the present application.
FIG. 9 is a schematic diagram of a signal flow of the information processing method according to a third embodiment of the present application.
FIG. 10 is a flowchart of the information processing method according to a fourth embodiment of the present application.
FIG. 11 is a flowchart of the information processing method according to a fifth embodiment of the present application.
FIG. 12 is a schematic structural diagram of an information processing apparatus according to a sixth embodiment of the present application.
FIG. 13 is a schematic structural diagram of a network device according to a seventh embodiment of the present application.

### DETAILED DESCRIPTION OF THE EMBODIMENTS

In order to make the purpose, technical solutions and advantages of the embodiments of the present application clearer, each of the embodiments of the present application will be described in detail below in conjunction with the drawings. However, it will be understood by those skilled in the art that in each embodiment of the present application, many technical details are presented to enable the reader to better understand the present application. However, even without these technical details and various variations and modifications based on each of the following embodiments, the technical solutions protected by the present application can be realized. The following embodiments are divided for descriptive convenience and shall not constitute any limitation to the specific manner of the present application, and the individual embodiments may be combined and referenced to each other without contradiction.

The purpose of embodiments of the present application aims to provide an information processing method, an information processing apparatus and a network device, which can ensure the low latency of the URLLC service when decoding.

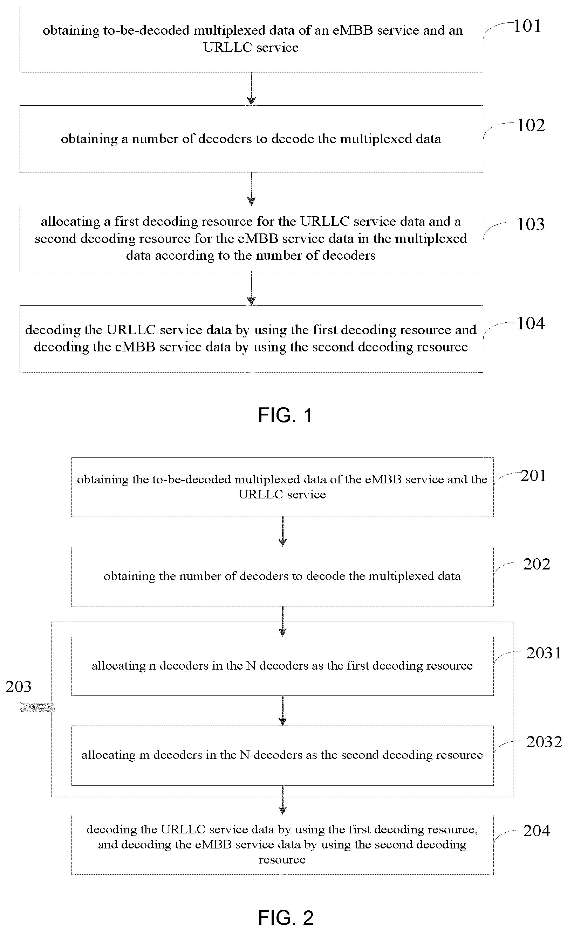

The first embodiment of the present application relates to an information processing method, the flowchart of which is shown in FIG. 1, including:
operation 101, obtaining to-be-decoded multiplexed data of an eMBB service and an URLLC service;
operation 102, obtaining a number of decoders to decode the multiplexed data;
operation 103, allocating a first decoding resource for the URLLC service data and a second decoding resource for the eMBB service data in the multiplexed data according to the number of decoders; and
operation 104, decoding the URLLC service data by using the first decoding resource and decoding the eMBB service data by using the second decoding resource.

In an embodiment of the present application, the first decoding resource and the second decoding resource can allocated respectively for the URLLC service data and the eMBB service data in the multiplexed data according to the number of decoders. The URLLC service data is decoded by using the first decoding resource and the eMBB service data is decoded by the second decoding resource, to completely decode the multiplexed data of the eMBB service and the URLLC service. Since the first decoding resource can be separately allocated for the URLLC service data and the first decoding resource is used to decode the URLLC service data, such that the embodiment of the present application can ensure the low latency of the URLLC service when decoding the multiplexed data of the eMBB service and the URLLC service, to avoid the problem of high latency of decoding the URLLC service due to the excessive occupation of decoding resources by the eMBB service data.

The second embodiment of the present application relates to an information processing method, the flowchart of which is shown in FIG. 2, including:
operation 201, obtaining the to-be-decoded multiplexed data of the eMBB service and the URLLC service.

It should be noted that the embodiment takes the multiplexed data of the eMBB service and the URLLC service in one time slot as an example for illustration.

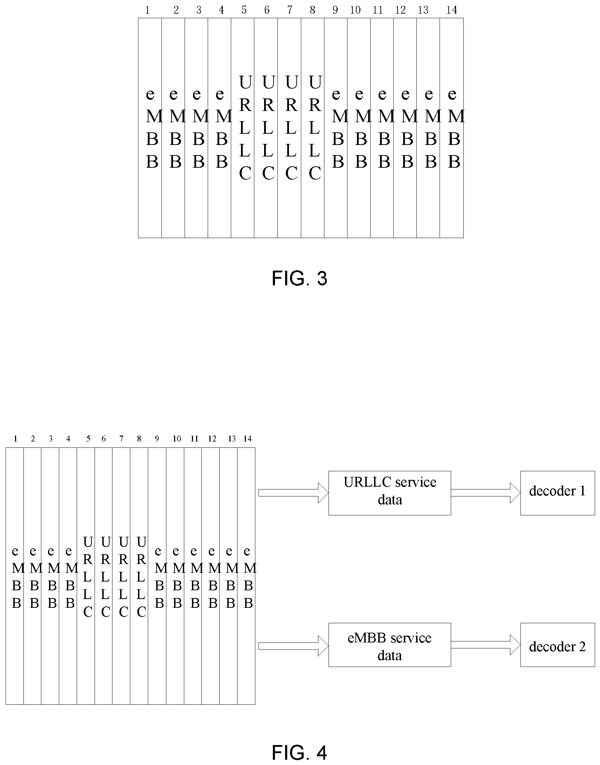

More specifically, the embodiment is illustrated with the structure of the multiplexed data of the eMBB service and the URLLC service as shown in FIG. 3, where the eMBB service data occupies the symbolic bits 1-4 and 9-14 for transmission, and the URLLC service data occupies the symbolic bits 5-8 for transmission.

Operation 202, obtaining the number of decoders to decode the multiplexed data.

In practice, in order to ensure low latency, the decoder is generally a hardware decoder, and the number of decoders is pre-set, for example, there is generally one decoder for terminal devices, such as mobile phones, tablets, etc., there are generally two or more decoders for base stations or servers. The number of decoders is depended on the hardware design requirements.

The embodiment is illustrated with N decoders, where N is an integer and N not less than 2.

Operation 203, allocating a first decoding resource for the URLLC service data and a second decoding resource for the eMBB service data in the multiplexed data according to the number of decoders.

As shown in FIG. 2, the operation 203 may include:
operation 2031, allocating n decoders in the N decoders as the first decoding resource; and
operation 2032, allocating m decoders in the N decoders as the second decoding resource.

The n and m are integers and a sum of n plus m is not greater than N.

In order to enable those skilled in the art to more clearly understand the specific method of operation 203 in the present embodiment, the following takes two scenarios in which n decoders and m decoders overlap or do not overlap as an example for illustration.

The first scenario 1: n decoders and m decoders do not overlap.

As shown in FIG. 4, N is 2 and decoders are the first decoder and the second decoder as an example for illustration. At this time, the first decoder can be allocated as the first decoding resource for URLLC service data according to operation 2031, and the second decoder can be allocated as the second decoding resource for eMBB service data according to operation 2032.

The second scenario: x decoders overlap in the n decoders and m decoders, where x is not less than 1, and not greater than min{n, m} and x is an integer.

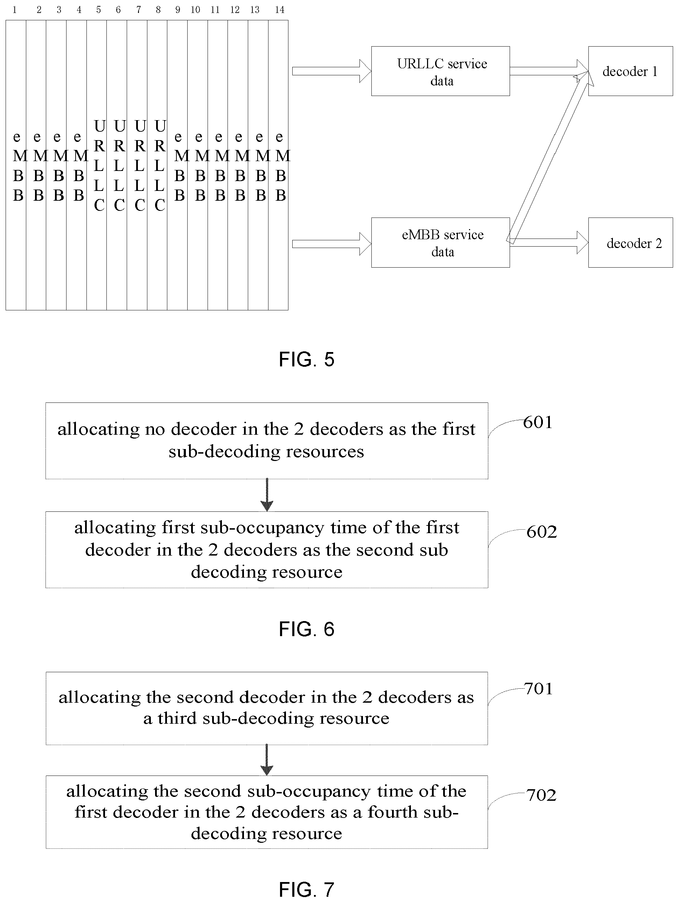

Specifically, as shown in FIG. 5, N is 2, decoders are the first decoder and the second decoder, where, n is 1, m is 2 and x is 1 as an example for illustration.

At this time, as shown in FIG. 6, the operation 2031 may include:
operation 601, allocating no decoder in the 2 decoders as the first sub-decoding resources.

Specifically, the number of decoders allocated in operation 601 is determined based on n-x. In the embodiment, n is 1 and x is 1, so the number of decoders allocated in operation 601 is 0, and the first sub-decoding resource is empty at this time.

Operation 602, allocating first sub-occupancy time of the first decoder in the 2 decoders as the second sub decoding resource.

It should be noted that the embodiment is illustrated by the example that the first decoder in FIG. 5 is used overlappingly for URLLC service data and eMBB service data, and since the first decoder is used overlappingly, the second sub-decoding resource is the time resource occupied by the first decoder decoding the URLLC service data.

At this time, the first decoding resource obtained by operation 2031 is the first sub-decoding resource obtained by operation 601 and the second sub-decoding resource obtained by operation 602, i.e., the decoding resource for a part of the time of the first decoder as shown in FIG. 5.

As shown in FIG. 7, the operation 2032 may include:
operation 701, allocating the second decoder in the 2 decoders as a third sub-decoding resource.

Specifically, the number of decoders allocated in operation 701 is determined based on m-x. In the embodiment, m is 2 and x is 1, so one decoders is allocated in operation 701. It should be noted that the second decoder allocated in operation 701 is only an example for the understanding of those skilled in the art, and does not constitute a specific limitation of operation 701.

Operation 702, allocating the second sub-occupancy time of the first decoder in the 2 decoders as a fourth sub-decoding resource.

It should be noted that the embodiment is illustrated by the example that the first decoder in FIG. 5 is used overlappingly for the URLLC service data and the eMBB service data, and since the first decoder is used overlappingly, the fourth sub-decoding resource is the time resource occupied by the first decoder for decoding eMBB service data.

At this time, the second decoding resource obtained by operation 2032 is the third sub-decoding resource obtained by operation 701 and the fourth sub-decoding resource obtained by operation 702, i.e., all decoding resource of the second decoder and the decoding resource for a part of the time of the first decoder as shown in FIG. 5.

It should be noted that in the second scenario, in order to ensure the low latency of the URLLC service data, in the overlapping use of the decoders, such as the first decoder shown in FIG. 5, the first sub-occupancy time corresponding to URLLC service data is generally set before the second sub-occupancy time corresponding to eMBB service data, i.e., in the first decoder, the decoding occupancy time is first allocated for the URLLC service data, and then the decoding occupancy time is allocated for the eMBB service data.

Operation 204, decoding the URLLC service data by using the first decoding resource, and decoding the eMBB service data by using the second decoding resource.

In the embodiment, the operation 204 decodes URLLC service data and eMBB service data in units of transport block (TB).

Specifically, the multiplexed data of eMBB service and URLLC service shown in FIG. 3 is taken as an example, assuming that the eMBB service data includes three TBs, which are TB1, TB2 and TB3, where TB1 corresponds to the eMBB service data in symbol bit 1, TB2 corresponds to the eMBB service data in symbol bits 2 and 3, TB3 corresponds to the eMBB service data in symbol bits 4 and 9-14. Assuming that the URLLC service data includes two TBs, which are TB4 and TB5, where TB4 corresponds to the URLLC service data in symbol bit 5 and TB5 corresponds to the URLLC service data in symbol bits 6-8. At this time, operation 204 uses the first decoding resource to decode TB4 and TB5, and uses the second decoding resource to decode TB1, TB2 and TB3.

As can be seen from the above disclosed solutions, the technical solution provided by the embodiment, both the URLLC service data and the eMBB service data are decoded by separately occupying independent decoding resources, and there is no need to queue up for the previously received code blocks to complete decoding, e.g., when TB4 needs to be decoded, there is no need to wait for TB3 to be completely received and successfully decoded, to ensure the low latency of the URLLC service during decoding.

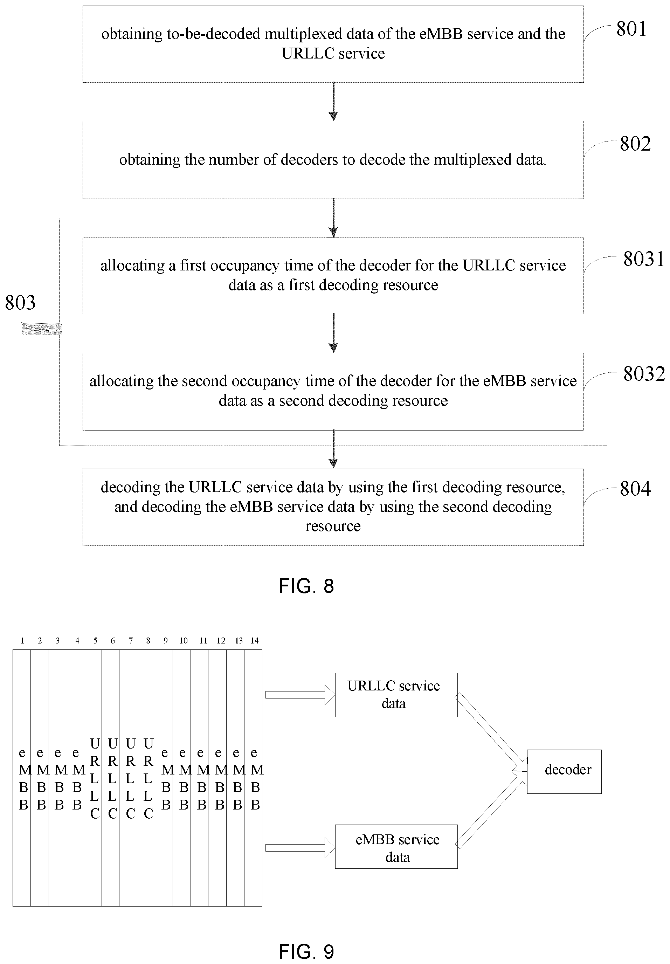

The third embodiment of the present application relates to an information processing method, the flowchart of which is shown in FIG. 8, including:
operation 801, obtaining to-be-decoded multiplexed data of the eMBB service and the URLLC service.

It should be noted that the embodiment takes the multiplexed data of the eMBB service and the URLLC service in one time slot as an example for illustration.

More specifically, the embodiment is illustrated with the structure of the multiplexed data of the eMBB service and the URLLC service as shown in FIG. 3, where the eMBB service data occupies the symbolic bits 1-4 and 9-14 for transmission, and the URLLC service data occupies the symbolic bits 5-8 for transmission.

Operation 802, obtaining the number of decoders to decode the multiplexed data.

In practice, in order to ensure low latency, the decoder is generally a hardware decoder, and the number of decoders is pre-set, for example, there is generally one decoder for terminal devices, such as mobile phones, tablets, etc., there are generally two or more decoders for base stations or servers. The number of decoders is depended on the hardware design requirements.

The embodiment takes one decoder as an example for illustration.

Operation 803, allocating a first decoding resource for the URLLC service data and a second decoding resource for the eMBB service data in the multiplexed data according to the number of decoders.

As shown in FIGS. 8 and 9, the operation 803 may include:
operation 8031, allocating a first occupancy time of the decoder for the URLLC service data as a first decoding resource; and
operation 8032, allocating the second occupancy time of the decoder for the eMBB service data as a second decoding resource.

In the embodiment, since there is only one decoder, both the first decoding resource and the second decoding resource are the occupancy time of the decoder. In order to ensure low latency of the URLLC service data. In the embodiment, the first occupancy time is set before the second occupancy time, i.e. the decoder first allocates decoding occupancy time (the first occupancy time) for URLLC service data, and then allocates decoding occupancy time (the second occupancy time) for eMBB service data.

Operation 804, decoding the URLLC service data by using the first decoding resource, and decoding the eMBB service data by using the second decoding resource.

In the embodiment, operation 804 decode URLLC service data and eMBB service data in units of transport blocks (TB).

Specifically, the multiplexed data of eMBB service and URLLC service shown in FIG. 3 is taken as an example, assuming that the eMBB service data includes three TBs, which are TB1, TB2 and TB3, where TB1 corresponds to the eMBB service data in symbol bit 1, TB2 corresponds to the eMBB service data in symbol bits 2 and 3, TB3 corresponds to the eMBB service data in symbol bits 4 and 9-14. Assuming that the URLLC service data includes two TBs, which are TB4 and TB5, where TB4 corresponds to the URLLC service data in symbol bit 5 and TB5 corresponds to the URLLC service data in symbol bits 6-8. At this time, operation 204 uses the first decoding resource to decode TB4 and TB5, and uses the second decoding resource to decode TB1, TB2 and TB3.

As can be seen from the above disclosed solutions, the technical solution provided by the embodiment, both URLLC service data and eMBB service data are decoded by separately occupying independent decoding resources, and there is no need to queue up for the previously received code blocks to complete decoding, e.g., when TB4 needs to be decoded, there is no need to wait for TB3 to be completely received and successfully decoded, to ensure the low latency of the URLLC service during decoding.

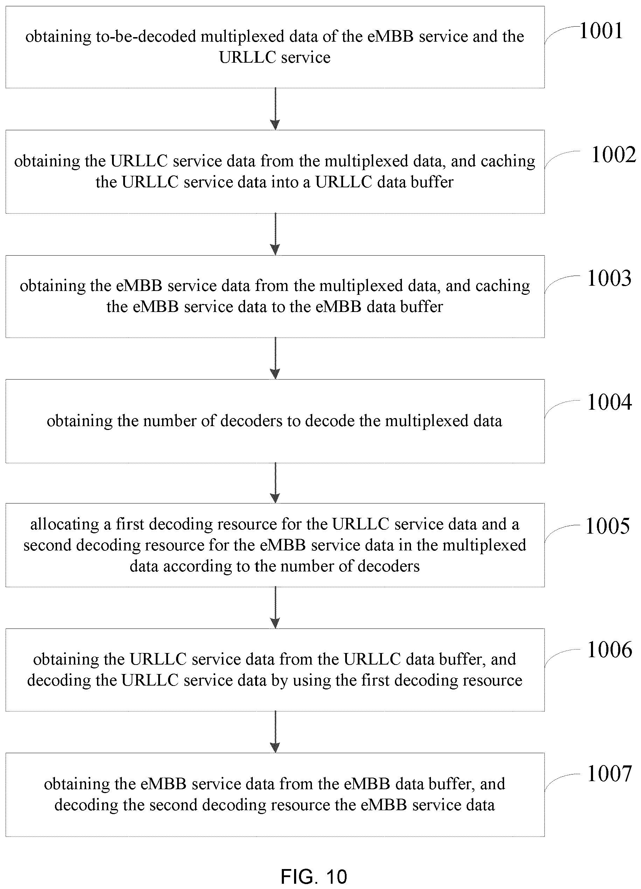

The fourth embodiment of the present application relates to an information processing method, the flowchart of which is shown in FIG. 10, including:
operation 1001, obtaining to-be-decoded multiplexed data of the eMBB service and the URLLC service.

It should be noted that the embodiment takes the multiplexed data of eMBB service and URLLC service in one time slot as an example for illustration.

More specifically, the embodiment is illustrated with the structure of the multiplexed data of the eMBB service and the URLLC service as shown in FIG. 3, where the eMBB service data occupies the symbolic bits 1-4 and 9-14 for transmission, and the URLLC service data occupies the symbolic bits 5-8 for transmission.

Operation 1002, obtaining the URLLC service data from the multiplexed data, and caching the URLLC service data into a URLLC data buffer.

Operation 1003, obtaining the eMBB service data from the multiplexed data, and caching the eMBB service data to the eMBB data buffer.

Operation 1004, obtaining the number of decoders to decode the multiplexed data.

In practice, in order to ensure low latency, the decoder is generally a hardware decoder, and the number of decoders is pre-set, for example, there is generally one decoder for terminal devices, such as mobile phones, tablets, etc., there are generally two or more decoders for base stations or servers. The number of decoders is depended on the hardware design requirements.

Operation 1005, allocating a first decoding resource for the URLLC service data and a second decoding resource for the eMBB service data in the multiplexed data according to the number of decoders.

In the embodiment, the specific embodiment method of operation 1005 can be found in the relevant contents described in the first to third embodiments, and will not be repeated here.

Operation 1006, obtaining the URLLC service data from the URLLC data buffer, and decoding the URLLC service data by using the first decoding resource.

Operation 1007, obtaining the eMBB service data from the eMBB data buffer, and decoding the second decoding resource the eMBB service data.

In the technical solution provided by the embodiment, on the basis of achieving the beneficial effects brought by the technical solutions of the first to third embodiments, since separate buffers are allocated for the URLLC service data and the eMBB service data respectively, the decoder reads the URLLC service data faster, to further ensure the low latency of the URLLC service during decoding.

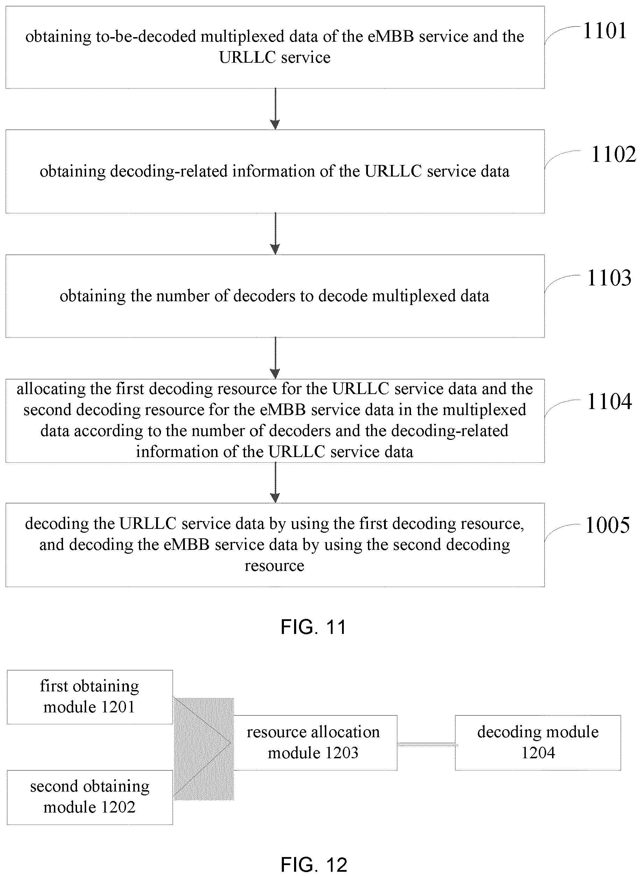

The fifth embodiment of the present application relates to an information processing method, the flowchart of which is shown in FIG. 11, including:
operation 1101, obtaining to-be-decoded multiplexed data of the eMBB service and the URLLC service.

It should be noted that the embodiment takes the multiplexed data of eMBB service and URLLC service in one time slot as an example for illustration.

More specifically, the embodiment is illustrated with the structure of the multiplexed data of the eMBB service and the URLLC service as shown in FIG. 3, where the eMBB service data occupies the symbolic bits 1-4 and 9-14 for transmission, and the URLLC service data occupies the symbolic bits 5-8 for transmission.

Operation 1102, obtaining decoding-related information of the URLLC service data.

In the embodiment, the decoding-related information of the URLLC service data includes: the size of the code block of the URLLC service data, the symbol bits occupied by the URLLC service data in the multiplexed data, the time required to decode the URLLC service data, the decoding method of the URLLC service data, etc.

The above is only an example, and the decoding-related information of the URLLC service may include other information, which will not be repeated here.

Operation 1103, obtaining the number of decoders to decode multiplexed data.

In practice, in order to ensure low latency, the decoder is generally a hardware decoder, and the number of decoders is pre-set, for example, there is generally one decoder for terminal devices, such as mobile phones, tablets, etc., there are generally two or more decoders for base stations or servers. The number of decoders is depended on the hardware design requirements.

Operation 1104, allocating the first decoding resource for the URLLC service data and the second decoding resource for the eMBB service data in the multiplexed data according to the number of decoders and the decoding-related information of the URLLC service data.

Operation 1105, decoding the URLLC service data by using the first decoding resource, and decoding the eMBB service data by using the second decoding resource.

The technical solution provided by the embodiment, on the basis of achieving the beneficial effects brought by the technical solutions of the first to third embodiments, since the decoding-related information of the URLLC service data is obtained, it is more reasonable in allocating the first decoding resources for the URLLC service data, to achieve the effect of optimizing the utilization rate of the decoding resources.

It should be noted that in the first to fifth embodiments, the functions of the decoder include: code block splitting, rate matching, interleaving, hybrid automatic repeat request (HRRQ), low density parity cheek (LDPC)/polar decoding, cyclical redundancy check (CRC), and code block cascading, etc. The decoder can also add other functions according to the actual needs, and each case will not be described here.

The sixth embodiment of the present application relates to an information processing device, the flowchart of which is shown in FIG. 12, including:
a first obtaining module 1201, for obtaining to-be-decoded multiplexed data of an enhanced mobile broadband (eMBB) service and an ultra reliability and low latency communication (URLLC) service; a second obtaining module 1202, for obtaining a number of decoders to decode the multiplexed data obtained by the first obtaining module 1201; a resource allocation module 1203, for allocating a first decoding resource for URLLC service data and a second decoding resource for eMBB service data in the multiplexed data obtained by the first obtaining module 1201, according to the number of decoders obtained by the second obtaining module 1202; a decoding module 1204, for decoding the URLLC service data by using the first decoding resource allocated by the resource allocation module 1203, and decoding the eMBB service data by using the second decoding resource allocated by the resource allocation module.

Specific methods of the technical solutions provided in the embodiment can be found with reference to the information processing methods provided in the first to fifth embodiments and will not be repeated here.

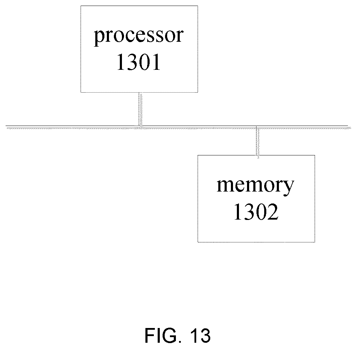

The seventh embodiment of the present application relates to a network device, as shown in FIG. 13, including:
at least one processor 1301; and
a memory 1302 communicated with the at least one processor 1301;
the memory 1302 stores instructions executable by the at least one processor, the instructions are executed by the at least one processor 1301 to enable the at least one processor 1301 to execute the information processing method described in the first to fifth embodiments of the present application.

The memory and the processor are connected by a bus, the bus may include any number of interconnected buses and bridges, and the bus connects together various circuits of one or more processors and the memory. The bus may also connect together various other circuits such as peripherals, voltage regulators, and power management circuits, which are well known in the art, and therefore will not be further described herein. The bus interface provides an interface between the bus and the transceiver. The transceiver may be a single element or a plurality of elements, such as a plurality of receivers and transmitters, providing units for communicating with various other devices on a transmission medium. Data processed by the processor is transmitted over the wireless medium via an antenna, and further, the antenna also receives the data and transmits the data to the processor.

The processor is responsible for managing the bus and the usual processing, and may also provide various functions including timing, peripheral interfaces, voltage regulation, power management, and other control functions, and the memory may be used to store data used by the processor when performing operations.

Those skilled in the art can understand that the above embodiments are specific embodiments of the present application, and in practice, various changes can be made in form and detail without departing from the scope of the present application.

## Claims

1. An information processing method, **characterizing by** comprising:
obtaining to-be-decoded multiplexed data of an enhanced mobile broadband (eMBB) service and an ultra reliability and low latency communication (URLLC) service;
obtaining a number of decoders to decode the multiplexed data;
allocating a first decoding resource for the URLLC service data and a second decoding resource for the eMBB service data in the multiplexed data according to the number of decoders; and
decoding the URLLC service data by using the first decoding resource, and
decoding the eMBB service data by using the second decoding resource.

2. The method according to claim 1, wherein the number of decoders is N, and N is an integer and not less than 2;
wherein the allocating the first decoding resource for the URLLC service data and the second decoding resource for the eMBB service data in the multiplexed data according to the number of decoders comprises:
allocating n decoders in the N decoders as the first decoding resource; and
allocating m decoders in the N decoders as the second decoding resource;
wherein the n, m are integers and a sum of n plus m is not greater than N.

3. The method according to claim 2, wherein if there are x decoders overlapping in the n decoders and the m decoders, x is not less than 1, and not greater than min{n, m} and x is an integer;
the allocating n decoders in the N decoders as the first decoding resource comprises:
allocating n-x decoders in the N decoders as a first sub-decoding resource; and
allocating first sub-occupancy time of x decoders for the URLLC service data as a second sub-decoding resource;
wherein the first sub-decoding resource and the second sub-decoding resource constitute the first decoding resource.

4. The method according to claim 3, wherein if there are x decoders overlapping in the n decoders and the m decoders, x is not less than 1, and not greater than min{n, m} and x is an integer;
the allocating the m decoders in the N decoders as the second decoding resource comprises:
allocating m-x decoders in the N decoders as a third sub-decoding resource; and
allocating second sub-occupancy time of x decoders for the eMBB service data as a fourth sub-decoding resource;
wherein the third sub-decoding resource and the fourth sub-decoding resource constitute the second decoding resource.

5. The method according to claim 1, wherein the number of the decoders is one, the allocating the first decoding resource for the URLLC service data and the second decoding resource for the eMBB service data in the multiplexed data according to the number of decoders comprises:
allocating first occupancy time of the decoder for the URLLC service data as the first decoding resource; and
allocating second occupancy time of the decoder for the eMBB service data as the second decoding resource.

6. The method according to claim 1, wherein after the obtaining to-be-decoded multiplexed data of the eMBB service and the URLLC service, and before the decoding the URLLC service data by using the first decoding resource and decoding the eMBB service data by using the second decoding resource, the method further comprises:
obtaining the URLLC service data from the multiplexed data, and caching the URLLC service data into a URLLC data buffer;
obtaining the eMBB service data from the multiplexed data, and caching the eMBB service data to the eMBB data buffer;
wherein the decoding the URLLC service data by using the first decoding resource, and decoding the eMBB service data by using the second decoding resource comprises:
obtaining the URLLC service data from the URLLC data buffer, and decoding the URLLC service data by using the first decoding resource; and
obtaining the eMBB service data from the eMBB data buffer, and decoding the eMBB service data by using the second decoding resource.

7. The method according to claim 1, wherein before the allocating the first decoding resource for the URLLC service data and the second decoding resource for the eMBB service data in the multiplexed data according to the number of decoders, the method further comprises:
obtaining decoding-related information of the URLLC service data;
wherein the allocating the first decoding resource for the URLLC service data and the second decoding resource for the eMBB service data in the multiplexed data according to the number of decoders comprises:
allocating the first decoding resource for the URLLC service data and the second decoding resource for the eMBB service data in the multiplexed data according to the number of decoders and the decoding-related information of the URLLC service data.

8. The method according to any one of claims 1 to 7, wherein functions of the decoder comprises but are not limited to: code block splitting, rate matching, interleaving, hybrid automatic repeat request (HRRQ), low density parity cheek (LDPC)/polar decoding, cyclical redundancy check (CRC), and code block cascading.

9. An information processing apparatus, **characterized by** comprising:
a first obtaining module, for obtaining to-be-decoded multiplexed data of an enhanced mobile broadband (eMBB) service and an ultra reliability and low latency communication (URLLC) service;
a second obtaining module, for obtaining a number of decoders to decode the multiplexed data obtained by the first obtaining module;
a resource allocation module, for allocating a first decoding resource for URLLC service data and a second decoding resource for eMBB service data in the multiplexed data obtained by the first obtaining module according to the number of decoders obtained by the second obtaining module; and
a decoding module, for decoding the URLLC service data by using the first decoding resource allocated by the resource allocation module, and
decoding the eMBB service data by using the second decoding resource allocated by the resource allocation module.

10. A network device, **characterized by** comprising:
at least one processor; and
a memory communicated with the at least one processor;
wherein the memory stores instructions executable by the at least one processor, the instructions are executed by the at least one processor to enable the at least one processor to perform the information processing method according to any one of claims 1 to 8.

11. A computer-readable storage medium, **characterized in that** the storage medium stores computer programs, the computer programs are executed by a processor to implement the information processing method according to any one of claims 1 to 8.
